# EUROPEAN PATENT SPECIFICATION

(11) **EP 3 670 382 B1**
(45) Date of publication and mention of the grant of the patent: **11.05.2022**
(21) Application number: 18306709.9
(22) Date of filing: 17.12.2018
(51) Int. Cl.: B65D 77/06, A47J 31/00, B65D 5/54, B65D 5/60

(54) **BAG-IN-SHELL PACKAGE FOR DISPENSING BULK MATERIAL**
BAG-IN-BOX-VERPACKUNG ZUM AUSGEBEN VON SCHÜTTGUT
EMBALLAGE CAISSE-OUTRE POUR DISTRIBUER DES PRODUITS EN VRAC

(43) Date of publication of application: 24.06.2020
(73) Proprietor: Smurfit Kappa France, 94160 St Mande (FR)
(72) Inventor: BENISTANT, René, 07130 Saint-Péray (FR)
(74) Representative: Fédit-Loriot

(56) References cited:
- FR-A1- 2 593 491
- GB-A- 2 049 625
- US-A- 3 083 889
- US-A- 3 580 466
- US-A1- 2007 278 120

## Description

The invention relates to a gravity feed dispenser for bulk material products. Within the food retail industry in particular, such dispensers are often referred to as gravity bins. The invention also relates to a bag-in-shell package forming part of the gravity feed dispenser.

A bag-in-shell package, also referred to as bag-in-container or Bag-in-Box^{®}, comprises an outer box or outer container made or rigid or semi-rigid material such as cardboard or corrugated cardboard, and a flexible liner, or bag, for receiving a bulk material.

By bulk material, it is meant here either:
- granulated material, such as pills, catalyst particles, wood pellets, granular fertilizers, rice, pasta such as orecchiette, beans or so;
- lumpy material, such as screws, biscuits, dolomite stones or cut tobacco material;
- liquid, e.g. liquid soap, ketchup, as well as
- powdery material, such as concrete, flour, spices, candy, etc.

The invention is not limited to bulk material goods, that are usually sold in supermarkets and commodity stores. It may also find applications in chemical engineering, pharmaceutical industry, agro-food industry, etc.

More generally, the invention may be of particular interest for bulk materials that are sensitive to moisture.

The patent document FR2593491 describes a container for a beverage vending machine, the container comprising a cardboard box and an inner bag for receiving dehydrated ingredient. The box and the bag are opened one after the other. Then a nozzle with a hopper is removed from the vending machine and placed over the container. Then the assembly hopper, nozzle and container is inverted and placed upside down in position in the vending machine.

There is a need for a bag-in-shell package for a gravity feed dispenser that would allow quicker installation on a holder of the dispenser.

There is provided a bag-in-shell package for a gravity feed dispenser as claimed in claim 1.

The bottom tearable area is delimited by at least part of the outer box tear line, and possibly by a folding line.

Alternatively, the outer box tearable portion may be entirely within a standing wall, in particular if the dispenser comprises a holder for receiving the package in a tilted position.

The inner bag is fixed to the outer box at an adhesion area that is within the borders of the outer box tearable portion, advantageously within the bottom tearable area.

Thus, when the outer box tearable portion is partly or entirely detached from the rest of the outer box, the inner bag is stressed via the adhesion area. The inner bag thus breaks, thus freeing its content which can drop because of the gravity.

The gravity feed dispenser as claimed in claim 7 comprises a holder onto which this package may be placed, this holder may comprise a valve below the package when installed. The package is to be installed with its bottom part onto the holder, such that its breakage causes the bulk material be automatically fed to the valve of the dispenser by gravity.

The bottom part of the package is thus intended to lay on the holder, preferably horizontally (i.e. with its normal vector parallel to the gravity vector).

The holder may thus comprise a seat portion arranged to receive the bag-in-shell package containing a bulk product in its inner bag. This seat may define an opening, the holder defining a passage between the opening and the valve for dispensing the bulk product.

The invention makes it possible to open simultaneously both the outer box and the inner bag. This opening may thus be performed when the package is already placed on a holder of the dispenser, or very close to being placed, thus avoiding the need for removing part of the holder as in document FR2593491 .

If the outer box tearable portion is entirely within the bottom part of the package, surrounded by the tearable line, a personnel may for example set the package on an horizontal holder such that it relies on a back edge, in a tilted way, thus allowing access to its bottom part; then access the bottom part and remove the tearable portion from the bottom part, which also breaks the inner bag; and while doing so lower the package such that its bottom part reaches the horizontal position and lays on the holder. The freed bulk content subsequently flows through the expected passage.

The outer box tearable portion may comprise only the bottom tearable area, i.e., the outer box tear line is entirely within the bottom part. In this case, the outer box tearable portion may be delimited either by the outer box tear line only, or by the outer box tear line and a folding line. The adhesion area is thus within the bottom tearable area.

Alternatively, the outer box tearable portion may comprise the bottom tearable area and a wall tearable area, this wall tearable area being on a standing wall of the outer box. In this case, the outer box tearable portion may include a folding line that articulates this standing wall and the bottom part. The adhesion area may be on the bottom tearable area and/or on the wall tearable area. That is, the outer box tearable portion may extend onto a standing wall of the bag-in-shell package, preferably a front wall, or alternatively a side wall or a rear wall. Access to the outer box tearable portion may thus be enhanced and opening of the bag-in-shell package is facilitated.

Advantageously, the inner bag may possibly be fixed to the outer box also at an additional adhesion area that is outside the outer box tearable portion. This additional adhesion area may increase the stress on the inner bag when the outer box tearable area is detached, thereby facilitating breakage.

Alternatively, the inner bag may possibly be fixed to the outer box only at the adhesion area within the first tearable portion.

In accordance with the invention as claimed, an inner bag tear line is arranged in the inner bag, said inner bag tear line delimiting an inner bag tearable portion.

The inner bag tearable portion is fixed to the outer box tearable portion at the adhesion area. Therefore, detaching the outer box tearable portion from the outer box breaks the inner bag tear line thanks to this binding at the adhesion zone.

Consequently, both the outer box and the inner bag are opened simultaneously by grabbing and tearing the outer box tearable portion.

The outer box defines an additional tear line that defines with the outer box tear line a strip portion. This may facilitate the opening of the package.

Further, this allows preparing the opening of the package before mounting it onto a holder. The final opening may thereafter readily be accomplished when the package has been mounted on the holder. Thereby spillage is effectively eliminated.

It may be advantageous that the inner bag be fixed to the outer box also at the additional adhesion area that is outside the outer box tearable portion, preferably outside this additional tear line. If personnel removes the strip line while the package is upside down, and then turn it over, this additional adhesion may prevent the assembly bag plus outer box tearable portion from falling through the bottom part.

The outer box tear line and/or the additional tear line may be or comprise a perforation line or any other kind of line of weakness.

The inner bag tear line may be or comprise a perforation line, but for hygienic reasons, it may be advantageous that this line be or comprise a line of reduced thickness.

In an embodiment, the outer box may define a dot opening that contacts the outer box tear line and/or the additional tear line. A human may thus introduce his/her finger within this opening, which may help for removing the outer box tearable portion.

The package may advantageously define a window in at least one of its standing walls, for displaying the bulk product. By this means, the content is clearly shown to costumers and personnel. Thereby printed information such as pictures of the product may be kept as a minimum. Further, personnel may easily check the remaining amount of the product such that the dispenser may be refilled at a proper time by removing the package and replacing with a new one.

The bottom part may be made of a single wall. Alternatively, the bottom part may be made of a plurality of flaps, in particular if the outer box is an American box. In this latter case, the outer box may for example comprise four walls and only two bottom flaps, or possibly four bottom flaps, in particular if two of these bottom flaps have a very small height on the blank.

Advantageously, the bottom tearable area may extend over at least 60%, advantageously over at least 80% of the length of the bottom part.

Advantageously, the bottom tearable area may extend over at least 60%, advantageously over at least 80% of the width of the bottom part.

Advantageously, when the bag is filled with bulk product, the inner bag tearable portion may extend over at least 60%, advantageously over at least 80% of the length of the bottom part.

Advantageously, when the bag is filled with bulk product, the inner bag tearable portion may extend over at least 60%, advantageously over at least 80% of the width of the bottom part.

The bulk product may thus be easily discharged, without having the need to tilt the package to empty it.

There is also provided a gravity feed dispenser for dispensing bulk products, comprising:
- an exchangeable bag-in-shell package as described herein above, for storing bulk material, and
- a stationary holder for supporting the bag-in-shell package.

The holder may comprise a seat to receive the package.

The seat may comprise wall portions, e.g. a horizontal wall portion and vertical wall portions, defining a volume for receiving the package.

The dimensions of a horizontal cross section of the bag-in-shell package and the corresponding distances between the wall portions of the stationary holder may be chosen such that the package is received with a tight fit in the seat portion. Hereby the package is securely fixed to the stationary holder when mounted.

The seat may define an opening, a valve below said opening, and a passage for the bulk material between the opening and the valve.

The holder and the package may be arranged for allowing the tearable portion to be removed from the package when it is held by the holder. This efficiently eliminates the risk of spillage of the bulk product during refilling.

There is also provided a flat package as claimed in claim 6.

The invention will now be described, by way of example, with reference to the accompanying drawings, wherein:
FIG. 1 schematically illustrates a gravity feed dispenser according to an embodiment of the invention.
FIG.2 to 6 are perspective views of an example of a bag-in-shell package according to an embodiment of the invention.
FIG. 7 shows an example of a flat package with a carton blank and a partially welded sheet, according to another embodiment of the invention.
FIG. 8-9 schematically illustrate an example method for preparing a filled bag-in-shell package according to an embodiment of the invention.

Similar references will be used from one figure to the other when corresponding to similar elements.

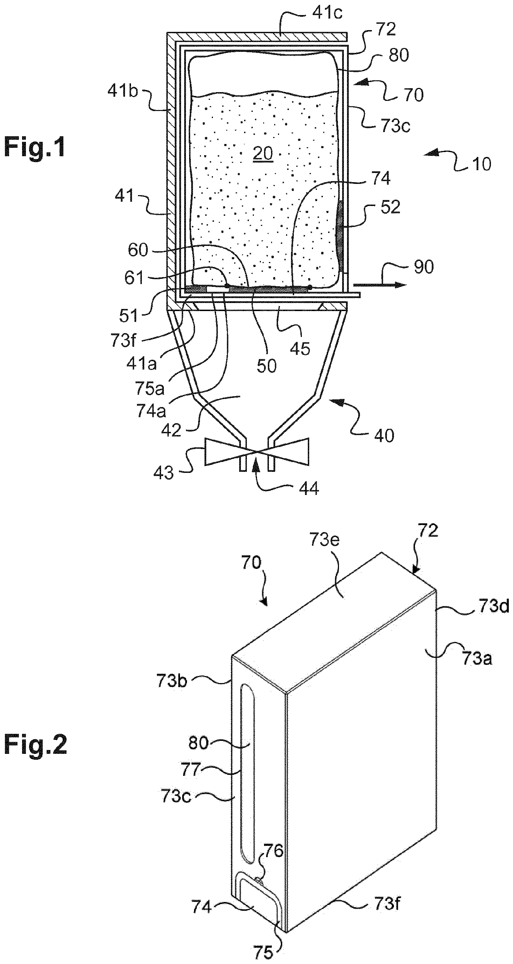

Referring to FIG. 1, a gravity feed dispenser 10 comprises a holder 40 and a container 70. This container is also shown on FIG. 2-6.

The container 70 is filled with bulk material 20, e.g. rice, and needs to be replaced when empty.

The holder 40 comprises a seat 41 for receiving the container 70. This seat 41 has a horizontal wall 41a that defines an opening 45.

The seat 41 leaves one wall 73c of the container 70 uncovered.

In this example, the seat further comprises three standing walls, one of them only 41b being visible on FIG. 1, and a top wall 41c.

The holder comprises a valve 43 below this opening 45, and it defines a passage 42 for the bulk material dropping trough the opening toward the valve 43. A user can collect bulk material at an outlet 44 below the valve 43.

The container 70 is of the bag-in-shell type, with an outer box 72 made of corrugated cardboard and an inner bag 80 of flexible material, e.g. polymeric material.

The inner bag 80 has no valve whatsoever; it is simply welded after its filling with the bulk material 20.

The inner bag defines a line of weakness schematically illustrated as 61, e.g., the thickness of plastic is reduced at this line 61.

The line of weakness 61 is closed and defines an inner bag tearable portion 60.

The bottom part of the container 70 is made here of a single wall 73f.

The container 70 has four standing walls 73a, 73b, 73c, 73d, and a top wall 73e.

As shown in FIG. 2, a front wall 73c exhibits an elongate window opening 77 extending vertically from an upper portion to a lower portion of the container 70.

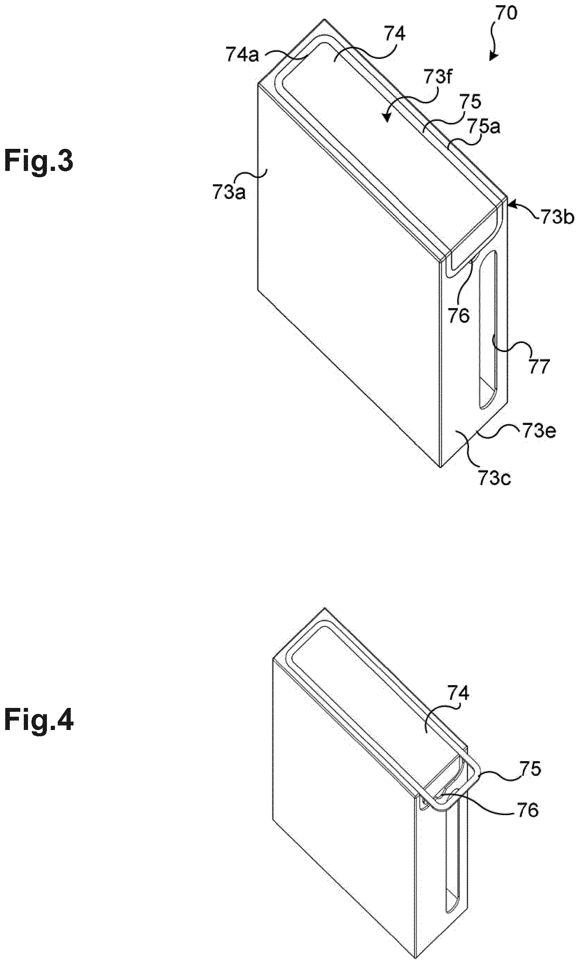

As shown in FIG. 3, the bag in shell package 70 defines an outer box tear line 74a at its bottom wall 73f and at its front wall 73c.

This tear line 74a is closed and defines an outer box tearable portion 74.

Referring back to FIG. 1, this tearable portion 74 is glued to the inner bag tearable portion 60 at an adhesion area 50.

The inner bag 80 is also glued to the outer box at additional adhesion areas, two of them 51, 52 being visible on FIG.1.

The tear line 74a is surrounded by an additional tear line 75a, both lines 74a, 75s defining a strip portion 75, which has a ribbon shape, and which surrounds the outer box tearable portion 74.

As shown on FIG. 3, before placing the package 70 onto the seat of the holder, a personnel first introduces a finger into a release opening 76 that contacts in this embodiment this strip portion 75, and then breaks parts of the tear lines 74a, 75a that are within the front wall 73b.

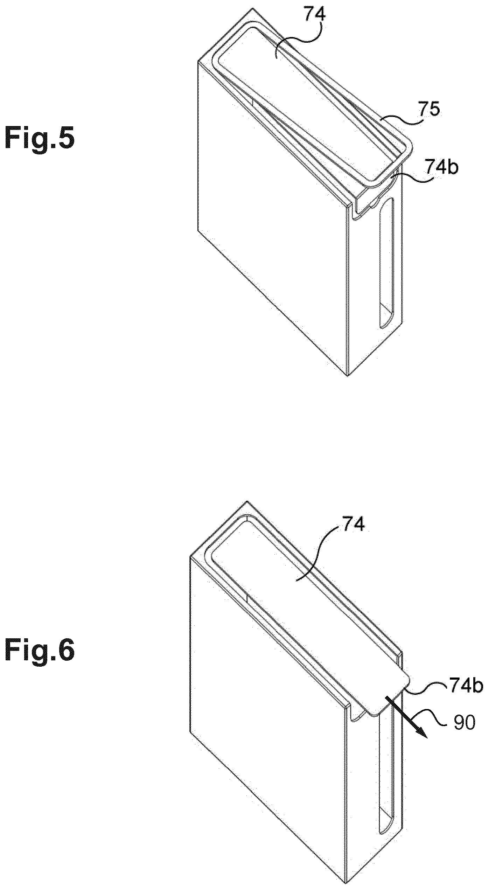

Then, as shown in FIG. 4 and in FIG. 5, the rest of the strip portion 75 can be removed.

The package 70 is then turned upside down and set placed onto the holder, as shown in FIG. 1. The additional adhesion areas 51, 52 allow avoiding the assembly bag 80 plus tearable portion 74 to collapse.

Then, once the bottom part 73f lays horizontally on the horizontal wall 41a of the seat 41, the tearable portion 74 may be pulled off the package. This movement, as illustrated by arrow 90 on FIG. 1 and 6, may be within the horizontal plane of the bottom part of the container.

Due to the fixing 50 between the portions 74, 60, the line of weakness 61 of the inner bag 80 breaks, thus freeing its content that drop through the passage 42.

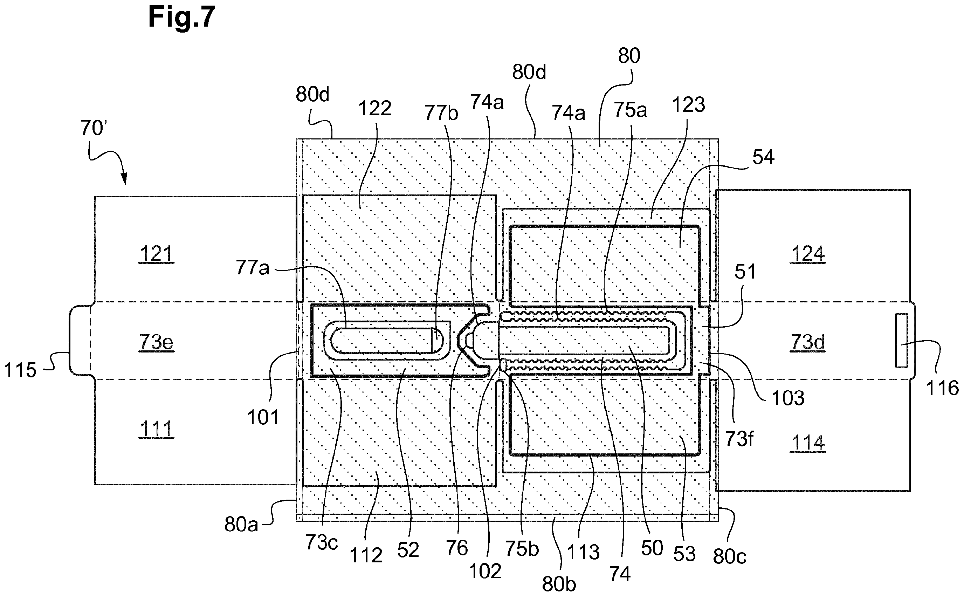

It may be pointed out that the portion 74 extends beyond the line of weakness of the inner bag 80. So, when these portions 74, 60 are pulled off, remaining borders of the bag 80 covers the border of the bottom wall, thus protecting the bulk material from contacting the corrugated cardboard. Referring now to the embodiment of FIG. 7, a flat package may comprise the illustrated carton blank 70'.

In this example, the blank is shaped so as to form an American box. It comprises four blank walls 73e, 73c, 73f and 73d, that are articulated one relative to the other via parallel folding lines 101-103. One blank wall 73e is articulated at its end to a joining element 115.

For each blank wall 73e, 73c, 73f and 73d, a first flap 111-114 and a second flap 121-124 are articulated to this blank wall.

A flat inner bag 80 is obtained, e.g., by superimposing two rectangular sheets of a food grade plastic, and by welding three sides 80a, 80b, 80c over four. No welding is made at the last side 80d, thus defining an opening for receiving the bulk product.

The flat inner bag 80 is fixed with glue onto the carton blank 70'.at a number of adhesion areas 50-54.

The flat inner bag 80 has a width, between its sides 80a and 80c that is equal or close to the distance between the folding lines 101 and 103. Its height, between its sides 80b and 80d is much greater than the height of the carton blank in this direction.

The flat inner bag 80 is fixed onto the blank 70' such that its sides 80a and 80c be slightly coincident with the folding lines 101, 103, respectively, and such that its sides 80b and 80d be both beyond the blank 70'.

In this embodiment, the wall 73c defines tear lines 74a, 77a and two release opening 76, 77b. The adhesion area 52 is outside these tear lines 74a, 77a.

In this embodiment, the wall 73f defines two U-shape tear lines 74a, 75a and a dot opening 75b that contacts the folding line 102 and these tear lines 74a, 75a.

A same reference 74a is used for a tear line on both walls 73c, 73f, because its is continuous and extends on these two walls, thus defining a tearable portion 74 that is surrounded by this tear line 74a and that comprises a bottom tearable area on the wall 73f and a wall tearable area on the wall 73c.

The adhesion area 50 is entirely within the bottom tearable area on the wall 73f.

The adhesion area 51 extends between the folding 103 and an end of the tear line 74a, on the wall 73f.

The adhesions areas 53, 54 are mainly located on the flaps 113, 123, respectively, covering also the folding lines that articulate these flaps 113, 123, to the wall 73f.

It will now be described an example pre-joining method of this flat package.

Some glue is applied onto a portion 116 at an end of the wall 73d.

First, the wall 73e and the flaps 111, 121 are folded onto the wall 73c and the flaps 112, 122, respectively, in a rotating movement around the folding line 101.

The, the wall 73d and the flaps 114, 124 are folded onto the wall 73f and the flaps 113, 123, respectively, in a rotating movement around the folding line 101. The joining element 115 is glued to the wall 73d via the adhesion area 116, thus allowing to obtain a pre-joined American box.

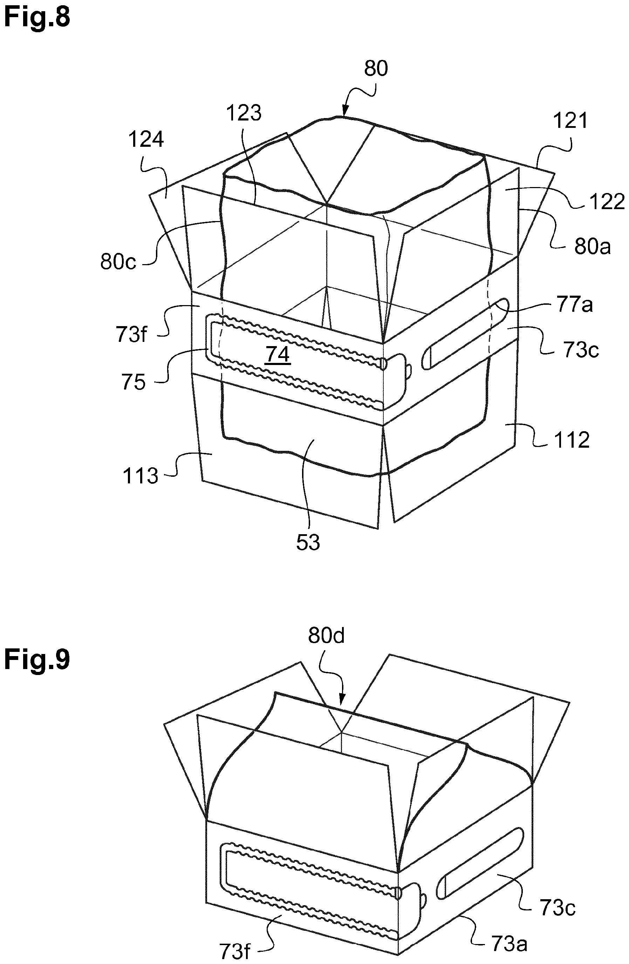

Referring now to FIG.8-9, which are quite schematically, it will be described how an example package is erected and filled.

The pre-joined American box is opened, as shown in FIG.8. The bag 80 which is glued onto the walls 73c and 73f and onto the flaps 113, 132, may thus also open up at least partially. Mechanical means and/or a person may open it entirely, as shown in FIG.8.

Then, a person closes the flaps 111-14, e.g. with an adhesive tape (not shown), thus forming the side wall 73a.

The bag may thus be filled with a bulk material and then welded at its side 80d, as shown in FIG.9.

The upper flaps 121-124 are then closed, e.g. with an adhesive tape, (not shown), thus forming the side wall 73b.

The bag 80 may be made of a food grade polymer material. Such materials may provide excellent sealing properties for protecting the bulk product from degrading by influence from the surrounding atmosphere. However, the inner bag may also be formed of paper or other paper pulp based materials, possibly exhibiting polymer coatings. Such paper pulp based materials may provide sufficient sealing capabilities for many products at the same time as they may be preferred from an environment protection point of view. Paper pulp based materials may also exhibit advantageous tear properties for easy opening of the bag-in-shell package.

Advantageously, the inner bag 80 is transparent such that the bulk material contained in the inner bag 80 and the content level may easily be observed at the window opening 77.

The tear lines 74a, 75a, 77a may be for example perforated tear lines arranged in the outer box 72.

In cases where the inner bag should form a completely sealed barrier from the surrounding atmosphere, the inner bag tear line 61 should preferably not comprise through penetrating perforations but may comprise other lines of weakness, such as reduced material thickness of the inner bag. In cases when the inner bag 80 is formed of paper pulp based or other easily teared materials, the inner bag tear line may be omitted.

Referring back to FIG.1, use of the gravity feed dispenser will now be explained.

When refilling the gravity feed dispenser, the previously used and emptied bag-in-shell package is removed from the stationary holder 40. A new bag-in-shall package 70, filled with a bulk product is first prepared for opening by inserting a finger into the release opening 76 and tearing loose a front part of the strip portion, as shown in FIG.4.

Thereafter, the entire strip portion 75 is teared off as illustrated in fig. 5. Thereby, a front portion of the tearable portion 74 which extends over the front wall 73c, may be folded out to form a grip tab 74b as shown in fig. 6. By this means the bag-in-shell package 70 has been prepared for final opening after mounting to the holder 40 of the gravity feed dispenser.

The bag-in-shell package 70 is thereafter inserted into the holder such that its bottom wall 73f lays horizontally onto the seat 41.

When the bag-in-shell package 70 has been prepared for opening and mounted to the holder 40 it may be opened to allow an initial portion of the bulk product to be poured into the interior space 42 of the holder 40. This is accomplished simply by grabbing the grip tab 74b and thereafter pulling the grip tap 74b.

Since the grip tab 74b forms part of the tearable portion 74 of the outer box and since the tearable portion 60 of the inner bag is attached to the tearable portion 74, pulling the grip tab 74b will tear loose both the tearable portions 60, 74 and allowing the bulk product to be poured by gravity into the interior space 42 of the holder 40.

The window opening 77 and the transparent interior bag 80 allow personnel to easily check the remaining amount of bulk material. When the bag-in-shell package is empty the personnel may readily remove the bag-in-box and replace it with a new one as described above.

## Claims

1. A bag-in-shell package (70) for a gravity feed dispenser, comprising
- an inner bag (80), for receiving a bulk material to be dispensed,
- an outer box (72) made or rigid or semi-rigid material such as cardboard or corrugated cardboard, comprising a bottom part (73f) and at least one standing wall (73a, 73b, 73c, 73d) that define a space for receiving the inner bag,
wherein
the outer box defines an outer box tear line (74a) that delimits an outer box tearable portion (74),
the outer box tearable portion comprises a bottom tearable area on the bottom part (73f),
**characterized in that** an inner bag tear line (61) is arranged in the inner bag (80), said inner bag tear line delimiting an inner bag tearable portion (60) that is fixed to the outer box at an adhesion area (50) that is within the borders of the outer box tearable portion,
wherein
the outer box (72) has an additional tear line (75a) that defines with the outer box tear line (74a) a strip portion (75), the strip portion (75) surrounds at least the bottom tearable area.

2. The bag-in-shell package (70) as recited in claim 1, wherein the outer box tearable portion (74) further comprises a wall tearable area on a standing wall (73c) of the outer box (72).

3. The bag-in-shell package (70) as recited in claim 1 or 2, wherein the inner bag tear line (61) is more centered, with regards to the borders of the bottom part, than the part of the outer bag tear line (74a) that is within the bottom part (73f).

4. The bag-in-shell package (70) as recited in any one of claims 1 to 3, wherein the inner bag is fixed to the outer box at an additional adhesion area (51, 52) that is outside the borders (74a) of the outer box tearable portion (74).

5. The bag-in-shell package (70) as recited in any one of claims 1 to 4, wherein outer box (72) defines a dot opening (76) that contacts the outer box tear line (74a) and/or the additional tear line (75a) if any.

6. A flat package arranged to constitute after forming a bag-in-shell package for a gravity feed dispenser, said flat package comprising
- a flat inner bag (80) having an opening for receiving a bulk material to be dispensed,
- a carton blank (70') made of rigid or semi-rigid material such as cardboard or corrugated cardboard, said blank comprises four blank walls (73e, 73c, 73f, 73d), that are articulated one relative to the other via parallel folding lines including an intermediate folding line (102) between two opposite folding lines (101, 103) being arranged so as to define after forming a bottom part (73f) and at least one standing wall (73a, 73b, 73c, 73d) that defines a space for receiving the inner bag,
wherein
the wall forming the bottom part ( 73f) defines two U-shape tear lines (74a, 75a) and a dot opening (75b) that contacts the intermediate folding line (102) and these tear lines (74a, 75a), whereby one of the U-shape tear lines (74a) delimits an outer box tearable portion (74), and wherein
an inner bag tear line is arranged in the inner bag (80), said inner bag tear line delimiting an inner bag tearable portion that is fixed to the carton blank at an adhesion area (50) that is within the borders of the outer box tearable portion.

7. A gravity feed dispenser (10) for dispensing bulk products, comprising:
- an exchangeable bag-in-shell package (70) according to any one of claims 1 to 5, and
- a stationary holder (40) for supporting the bag-in-shell package.

8. The gravity feed dispenser (10) according to claim 7, wherein
the holder (70) comprises a seat (41) to receive the bag-in-shell package (70), said seat defining an opening (45),
the holder (70) comprises a valve (43) below said opening,
the holder (70 defines a passage (42) between the opening (45) and the valve (43).

9. The gravity feed dispenser (10) according to claim 8, wherein the seat (41) is arranged such that the bottom part (73f) of the bag-in-shell package (70) lays horizontally onto said seat.

10. The gravity feed dispenser (10) according to any one of claims 7 to 9, wherein dimensions of a horizontal cross section of the bag-in-shell package (70) and the corresponding distances between wall portions (41a, 41b, 41c) of the stationary holder (40) are chosen such that the package is received with a tight fit in the seat portion.

11. The gravity feed dispenser (10) according to any one of claims 7 to 10, wherein the holder (40) and the bag-in-shell package (70) are arranged for allowing the outer box tearable portion (74) to be removed from the bag-in-shell package when it is held by the holder.

## Patentansprüche

1. Bag-in-Box-Verpackung (70) für einen Spender mit Schwerkraftzufuhr, umfassend
- einen Innenbeutel (80) zur Aufnahme von auszugebendem Schüttgut,
- einen Außenkarton (72) aus starrem oder halbstarrem Material wie Pappe oder Wellpappe, umfassend einen unteren Teil (73f) und mindestens eine stehende Wand (73a, 73b, 73c, 73d), die einen Raum zur Aufnahme des Innenbeutels definieren,
wobei
der Außenkarton eine Außenkarton-Abreißlinie (74a) definiert, die einen abreißbaren Abschnitt des Außenkartons (74) begrenzt,
der abreißbare Abschnitt des Außenkartons einen unteren abreißbaren Bereich am unteren Teil (73f) umfasst,
**dadurch gekennzeichnet, dass** eine Innenbeutel-Abreißlinie (61) im Innenbeutel (80) angeordnet ist, wobei die Innenbeutel-Abreißlinie einen abreißbaren Abschnitt des Innenbeutels (60) begrenzt, der in einem Klebebereich (50), der sich innerhalb der Grenzen des abreißbaren Bereichs des Außenkartons befindet, an den Außenkarton befestigt ist,
wobei
der Außenkarton (72) eine zusätzliche Abreißlinie (75a) aufweist, die mit der Außenkarton-Abreißlinie (74a) einen Streifenabschnitt (75) definiert, wobei der Streifenabschnitt (75) mindestens den unteren abreißbaren Bereich umgibt.

2. Bag-in-Box-Verpackung (70) nach Anspruch 1, wobei der abreißbare Abschnitt des Außenkartons (74) ferner einen abreißbaren Wandbereich an einer stehenden Wand (73c) des Außenkartons (72) umfasst.

3. Bag-in-Box-Verpackung (70) nach Anspruch 1 oder 2, wobei die Innenbeutel-Abreißlinie (61) hinsichtlich der Grenzen des unteren Teils zentrierter ist als der Teil der Außenkarton-Abreißlinie (74a), der sich im unteren Teil (73f) befindet.

4. Bag-in-Box-Verpackung (70) nach einem der Ansprüche 1 bis 3, wobei der Innenbeutel in einem zusätzlichen Klebebereich (51, 52), der sich außerhalb der Grenzen (74a) des abreißbaren Abschnitts des Außenkartons (74) befindet, an den Außenkarton befestigt ist.

5. Bag-in-Box-Verpackung (70) nach einem der Ansprüche 1 bis 4, wobei der Außenkarton (72) eine Punktöffnung (76) definiert, die die Außenkarton-Abreißlinie (74a) und/oder die zusätzliche Abreißlinie (75a), falls vorhanden, kontaktiert.

6. Flachverpackung, die angeordnet ist, um nach dem Formen eine Bag-in-Box-Verpackung für einen Spender mit Schwerkraftzufuhr zu bilden, wobei die Flachverpackung Folgendes umfasst:
- einen flachen Innenbeutel (80) mit einer Öffnung zur Aufnahme von auszugebendem Schüttgut,
- einen Kartonrohling (70') aus starrem oder halbstarrem Material wie Pappe oder Wellpappe, wobei der Rohling vier Rohlingwände (73e, 73c, 73f, 73d) umfasst, die über parallele Faltlinien bezüglich einander schwenkbar sind, einschließlich einer Zwischenfaltlinie (102) zwischen zwei gegenüberliegenden Faltlinien (101, 103), die so angeordnet sind, dass sie nach dem Formen einen unteren Teil (73f) und mindestens eine stehende Wand (73a, 73b, 73c, 73d) definieren, die einen Raum zur Aufnahme des Innenbeutels definiert,
wobei die den unteren Teil (73f) bildende Wand zwei U-förmige Abreißlinien (74a, 75a) und eine Punktöffnung (75b) definiert, die die Zwischenfaltlinie (102) und diese Abreißlinien (74a, 75a) kontaktiert, wobei eine der U-förmigen Abreißlinien (74a) einen abreißbaren Abschnitt des Außenkartons (74) begrenzt und wobei eine Innenbeutel-Abreißlinie im Innenbeutel (80) angeordnet ist, wobei die Innenbeutel-Abreißlinie einen abreißbaren Abschnitt des Innenbeutels begrenzt, der in einem Klebebereich (50), der sich innerhalb der Grenzen des abreißbaren Abschnitts des Außenkartons befindet, an den Kartonrohling befestigt ist.

7. Spender mit Schwerkraftzufuhr (10) zum Ausgeben von Schüttgut, umfassend:
- eine austauschbare Bag-in-Box-Verpackung (70) nach einem der Ansprüche 1 bis 5, und
- einen stationären Halter (40) zum Unterstützen der Bag-in-Box-Verpackung.

8. Spender mit Schwerkraftzufuhr (10) nach Anspruch 7, wobei der Halter (70) einen Sitz (41) zum Aufnehmen der Bag-in-Box-Verpackung (70) umfasst, wobei der Sitz eine Öffnung (45) definiert,
der Halter (70) ein Ventil (43) unter der Öffnung umfasst,
der Halter (70) einen Durchgang (42) zwischen der Öffnung (45) und dem Ventil (43) definiert.

9. Spender mit Schwerkraftzufuhr (10) nach Anspruch 8, wobei der Sitz (41) so angeordnet ist, dass der untere Teil (73f) der Bag-in-Box-Verpackung (70) horizontal auf dem Sitz liegt.

10. Spender mit Schwerkraftzufuhr (10) nach einem der Ansprüche 7 bis 9, wobei Abmessungen eines horizontalen Querschnitts der Bag-in-Box-Verpackung (70) und die entsprechenden Abstände zwischen Wandabschnitten (41a, 41b, 41c) des stationären Halters (40) so gewählt sind, dass die Verpackung in fester Passung im Sitzabschnitt aufgenommen wird.

11. Spender mit Schwerkraftzufuhr (10) nach einem der Ansprüche 7 bis 10, wobei der Halter (40) und die Bag-in-Box-Verpackung (70) angeordnet sind, um ein Entfernen des abreißbaren Abschnitts des Außenkartons (74) von der Bag-in-Box-Verpackung, wenn sie vom Halter gehalten wird, zu ermöglichen.

## Revendications

1. Emballage caisse-outre (70) pour un distributeur par gravité, comprenant
- un sac intérieur (80), pour recevoir un matériau en vrac à distribuer,
- une boîte extérieure (72) fabriquée en un matériau rigide ou semi-rigide comme du carton ou du carton ondulé, comprenant une partie de fond (73f) et au moins une paroi verticale (73a, 73b, 73c, 73d) qui définissent un espace pour recevoir le sac intérieur,
dans lequel
la boîte extérieure définit une ligne de déchirure de boîte extérieure (74a) qui délimite une portion déchirable de boîte extérieure (74),
la portion déchirable de boîte extérieure comprend une zone déchirable de fond sur la partie de fond (73f),
**caractérisé en ce qu'**une ligne de déchirure de sac intérieur (61) est agencée dans le sac intérieur (80), ladite ligne de déchirure de sac intérieur délimitant une portion déchirable de sac intérieur (60) qui est fixée à la boîte extérieure au niveau d'une zone d'adhérence (50) qui se trouve dans les limites de la portion déchirable de boîte extérieure,
dans lequel
la boîte extérieure (72) présente une ligne de déchirure supplémentaire (75a) qui définit avec la ligne de déchirure de boîte extérieure (74a) une portion de bande (75), la portion de bande (75) entoure au moins la zone déchirable de fond.

2. Emballage caisse-outre (70) selon la revendication 1, dans lequel la portion déchirable de boîte extérieure (74) comprend en outre une zone déchirable de paroi sur une paroi verticale (73c) de la boîte extérieure (72).

3. Emballage caisse-outre (70) selon la revendication 1 ou 2, dans lequel la ligne de déchirure de sac intérieur (61) est plus centrée, par rapport aux limites de la partie de fond, que la partie de la ligne de déchirure de boîte extérieure (74a) qui se trouve dans la partie de fond (73f).

4. Emballage caisse-outre (70) selon l'une quelconque des revendications 1 à 3, dans lequel le sac intérieur est fixé à la boîte extérieure au niveau d'une zone d'adhérence supplémentaire (51, 52) qui se trouve en dehors des limites (74a) de la portion déchirable de boîte extérieure (74).

5. Emballage caisse-outre (70) selon l'une quelconque des revendications 1 à 4, dans lequel la boîte extérieure (72) définit un point d'ouverture (76) qui entre en contact avec la ligne de déchirure de boîte extérieure (74a) et/ou la ligne de déchirure supplémentaire (75a) le cas échéant.

6. Emballage plat agencé pour constituer après formation un emballage caisse-outre pour un distributeur par gravité, ledit emballage plat comprenant
- un sac intérieur plat (80) présentant une ouverture pour recevoir un matériau en vrac à distribuer,
- un flan de carton (70') fabriqué en un matériau rigide ou semi-rigide comme du carton ou du carton ondulé, ledit flan comprend quatre parois de flan (73e, 73c, 73f, 73d), qui sont articulées les unes par rapport aux autres par le biais de lignes de pliage parallèles comportant une ligne de pliage intermédiaire (102) entre deux lignes de pliage opposées (101, 103) qui sont agencées pour définir après formation une partie de fond (73f) et au moins une paroi verticale (73a, 73b, 73c, 73d) qui définit un espace pour recevoir le sac intérieur,
dans lequel
la paroi formant la partie de fond (73f) définit deux lignes de déchirure en forme de U (74a, 75a) et un point d'ouverture (75b) qui entre en contact avec la ligne de pliage intermédiaire (102) et ces lignes de déchirure (74a, 75a) moyennant quoi l'une des lignes de déchirure en forme de U (74a) délimite une portion déchirable de boîte extérieure (74), et dans lequel
une ligne de déchirure de sac intérieur est agencée dans le sac intérieur (80), ladite ligne de déchirure de sac intérieur délimitant une portion déchirable de sac intérieur qui est fixée au flan de carton au niveau d'une zone d'adhérence (50) qui se trouve dans les limites de la portion déchirable de boîte extérieure.

7. Distributeur par gravité (10) pour distribuer des produits en vrac, comprenant :
- un emballage caisse-outre échangeable (70) selon l'une quelconque des revendications 1 à 5, et
- un support fixe (40) pour supporter l'emballage caisse-outre.

8. Distributeur par gravité (10) selon la revendication 7, dans lequel le support (70) comprend un siège (41) pour recevoir l'emballage caisse-outre (70), ledit siège définissant une ouverture (45),
le support (70) comprend une vanne (43) sous ladite ouverture,
le support (70) définit un passage (42) entre l'ouverture (45) et la vanne (43).

9. Distributeur par gravité (10) selon la revendication 8, dans lequel le siège (41) est agencé de sorte que la partie de fond (73f) de l'emballage caisse-outre (70) repose horizontalement sur ledit siège.

10. Distributeur par gravité (10) selon l'une quelconque des revendications 7 à 9, dans lequel des dimensions d'une section transversale horizontale de l'emballage caisse-outre (70) et les distances correspondantes entre des portions de paroi (41a, 41b, 41c) du support fixe (40) sont choisies de sorte que l'emballage soit reçu dans la portion de siège avec un ajustement serré.

11. Distributeur par gravité (10) selon l'une quelconque des revendications 7 à 10, dans lequel le support (40) et l'emballage caisse-outre (70) sont agencés pour permettre à la portion déchirable de boîte extérieure (74) d'être retirée de l'emballage caisse-outre lorsqu'il est supporté par le support.
